# EUROPÄISCHE PATENTSCHRIFT

(11) **EP 3 985 290 B1**
(45) Veröffentlichungstag und Bekanntmachung des Hinweises auf die Patenterteilung: **28.06.2023**
(21) Anmeldenummer: 21201908.7
(22) Anmeldetag: 11.10.2021
(51) Int. Cl.: F16L 5/10, F16L 5/14

(54) **HYDRAULIKVERBINDUNGSVORRICHTUNG ZUR VERBINDUNG ZWEIER HYDRAULISCHER FUNKTIONSELEMENTE UND VERFAHREN ZUM HERSTELLEN EINER SOLCHEN HYDRAULIKVERBINDUNGSVORRICHTUNG**
HYDRAULIC CONNECTING DEVICE FOR CONNECTING TWO HYDRAULIC FUNCTIONAL ELEMENTS AND METHOD FOR MANUFACTURING SUCH A HYDRAULIC CONNECTING DEVICE
DISPOSITIF DE RACCORDEMENT HYDRAULIQUE PERMETTANT DE RACCORDER DEUX ÉLÉMENTS FONCTIONNELS HYDRAULIQUES ET PROCÉDÉ DE FABRICATION D'UN TEL DISPOSITIF DE RACCORDEMENT HYDRAULIQUE

(30) Priorität: 15.10.2020 DE 102020213042
(43) Veröffentlichungstag der Anmeldung: 20.04.2022
(73) Patentinhaber: Robert Bosch GmbH, 70442 Stuttgart (DE)
(72) Erfinder: Arnold, Bernhard, 97849 Roden-Ansbach (DE); Englert, Nicolas, 97816 Lohr (DE)

(56) Entgegenhaltungen:
- DE-A1- 3 140 952
- US-A1- 2008 092 844
- US-A1- 2009 001 716

## Beschreibung

Die vorliegende Erfindung bezieht sich auf eine Hydraulikverbindungsvorrichtung zur Verbindung zweier hydraulischer Funktionselemente und ein Verfahren zum Herstellen einer solchen Hydraulikverbindungsvorrichtung.

US 2008/092884 A1 zeigt eine Abdichtvorrichtung zur Abdichtung zwischen Rohren in Gehäuseöffnungen der Abdichtvorrichtung. US 2009/001716 A1 zeigt einen einteiligen Schlauchverbinder zur Anordnung in einer Tankgehäuseöffnung eines tragbaren handgeführten Arbeitsgeräts. DE 31 40 952 A1 zeigt eine Vorrichtung zum Abdichten von Leitungen. Umgebungsbedingungen von technischen Anlagen stellen oft spezielle Anforderungen an die Konstruktion der technischen Anlage, die zur korrekten und sicheren Funktion der technischen Anlage zu erfüllen sind. Je nach Anwendung ist es dabei notwendig, Teile der technischen Anlage in verschiedenen Räumen oder Zonen zu montieren. Gründe hierfür können sein, dass dadurch der technische und finanzielle Aufwand für die Konstruktion der technischen Anlage in Grenzen haltbar ist oder dass die gegebenen Platzverhältnisse nichts anderes zulassen.

Bei hydraulischen Anlagen werden Anlagenkomponenten in verschiedenen Räumen oder Zonen montiert, wenn in einem Raum oder einer Zone beispielsweise eine feuchte oder nasse Umgebung vorliegt, in der ein Schutz der Anlage gegen Dampf und/oder Wasser gefordert ist. Andere Beispiele für die Montage von hydraulischen Anlagenkomponenten in verschiedenen Räumen oder Zonen sind eine Umgebung mit für die Anlage hohen und/oder niedrigen Temperaturen oder Umgebungen mit Explosionsgefährdung. Solche Umgebungen können auch als "anspruchsvolle" Umgebung für Funktionselemente der hydraulischen Anlage bezeichnet werden.

Für die korrekte Funktion der hydraulischen Komponenten der technischen Anlage ist eine Verbindung zwischen den beiden Zonen durch eine Zonentrennung, insbesondere Wand, zu schaffen, die zur Erfüllung der speziellen Anforderungen abzudichten ist. Dabei ist die Dicht- bzw. Durchgangsstelle bei der Zonentrennung entsprechend den zu erwartenden Belastungen auszulegen. Je nach Anforderung sind solche Belastungen beispielweise Temperaturübertragung, Druckfestigkeit, Dichtheit, Lärmübertragung, Relativbewegung. Problematisch ist, dass hydraulische Verbindungen in der Regel mehrere Verbindungsrohre benötigen für insbesondere Leckage-, Steuer- und Versorgungsanschlüsse.

Daher ist es Aufgabe der vorliegenden Erfindung, eine Hydraulikverbindungsvorrichtung zur Verbindung zweier hydraulischer Funktionselemente und ein Verfahren zum Herstellen einer solchen Hydraulikverbindungsvorrichtung bereitzustellen, mit welchen die zuvor genannten Probleme gelöst werden können. Insbesondere sollen eine Hydraulikverbindungsvorrichtung zur Verbindung zweier hydraulischer Funktionselemente und ein Verfahren zum Herstellen einer solchen Hydraulikverbindungsvorrichtung bereitgestellt werden, mit welchen eine kompakte und kostengünstig herstellbare Hydraulikverbindungsvorrichtung bereitsteht, die bei unaufwändiger Montage eine an verschiedene Erfordernisse anpassbare und betriebssichere Abdichtung zwischen verschiedenen Zonen gewährleistet, in der Funktionselemente der hydraulischen Anlage montiert sind.

Diese Aufgabe wird durch eine Hydraulikverbindungsvorrichtung zur Verbindung zweier hydraulischer Funktionselemente nach Anspruch 1 gelöst. Die Hydraulikverbindungsvorrichtung hat einen Körper, in dem mindestens zwei Kanäle angeordnet sind, die Durchgangsöffnungen durch den Körper bilden, mindestens ein erstes Dichtelement zum Abdichten des Körpers in einer Öffnung einer Trennvorrichtung, durch welche der Körper hindurchzuführen ist, und mindestens einem zweiten Dichtelement zum Abdichten der Verbindung zwischen dem Körper und dem jeweiligen Funktionselement, wie in Anspruch 1 beschrieben.

Die beschriebene Hydraulikverbindungsvorrichtung ist derart ausgestaltet, dass mindestens zwei Kanäle derart durch die Hydraulikverbindungsvorrichtung geführt sind, dass sowohl der Abstand der Kanäle zueinander als auch der Abstand zu dem Äußeren der Hydraulikverbindungsvorrichtung die Anforderungen der Zone sicherstellen, welche die höheren Anforderungen an die Dichtigkeit oder Funktion der Funktionselemente der hydraulischen Anlage stellen.

Dabei hat die in den Ansprüchen beanspruchte Hydraulikverbindungsvorrichtung eine Außenform, die sicher und unaufwändig in der Zonentrennung, insbesondere Wand, abdichtbar ist. Dadurch ermöglicht die Hydraulikverbindungsvorrichtung eine sehr schnell montierbare und dabei sichere Abdichtung der Hydraulikverbindungsvorrichtung in einer Wand oder Trennung von verschiedenen Zonen, in denen jeweils mindestens ein Teil der Hydraulikanlage montiert ist.

Vorteilhaft ist zudem, dass die Hydraulikverbindungsvorrichtung mit unaufwändigen Herstellschritten herstellbar ist. Dadurch ist die Hydraulikverbindungsvorrichtung kostengünstig herstellbar.

Insgesamt ist die zuvor beschriebene und in den Ansprüchen beanspruchte Hydraulikverbindungsvorrichtung derart aufgebaut, dass die Hydraulikverbindungsvorrichtung nicht nur kompakt gebaut, sondern auch kostengünstig in der Herstellung und Montage ist und dabei eine für verschiedene Erfordernisse anpassbare und betriebssichere Abdichtung zwischen verschiedenen Zonen gewährleisten kann, in der Funktionselemente der hydraulischen Anlage montiert sind. Dies trägt mit zu einer minimierten Zahl von Anlagenstillständen einer übergeordneten Anlage bei. Dadurch sind auch günstige Betriebskosten der Anlage realisierbar, in welcher die Vorrichtung eingesetzt ist. Zudem trägt dies mit zu einem geringen Wartungsaufwand der Anlage bei.

Vorteilhafte weitere Ausgestaltungen der beschriebenen Hydraulikverbindungsvorrichtung sind in den abhängigen Ansprüchen angegeben.

Bei den Ausführungsbeispielen ist der Körper an seinem Außenumfang zur Aufnahme des mindestens einen ersten Dichtelements ausgestaltet ist.

Möglicherweise hat der Körper mindestens eine Aussparung, die zur Aufnahme des mindestens einen zweiten Dichtelements ausgestaltet ist, wobei die mindestens eine Aussparung um mindestens einen der mindestens zwei Kanäle des Körpers herum angeordnet ist.

Die mindestens zwei Kanäle können in dem Körper beabstandet voneinander angeordnet sein.

Denkbar ist, dass mindestens ein Kanal der mindestens zwei Kanäle zur Aufnahme eines flüssigen oder gasförmigen Mediums ausgestaltet ist.

In einer speziellen Ausgestaltung ist mindestens ein Kanal der mindestens zwei Kanäle zur Aufnahme eines Stromkabels oder zur Aufnahme einer Rohrleitung für ein flüssiges oder gasförmiges Medium ausgestaltet.

Gemäß einer Option ist der Körper ein Hohlzylinder. Alternativ hat der Körper einen zumindest teilweise eckigen Querschnitt. Alternativ oder zusätzlich hat der Körper einen zumindest teilweise ovalen Querschnitt.

Die zuvor beschriebene Hydraulikverbindungsvorrichtung hat zudem einen ersten Flansch zur Befestigung der Hydraulikverbindungsvorrichtung an einem ersten hydraulischen Funktionselement und einen zweiten Flansch zur Befestigung der Hydraulikverbindungsvorrichtung an einem zweiten hydraulischen Funktionselement, wie in Anspruch 1 beschrieben.

Mindestens eine zuvor beschriebene Hydraulikverbindungsvorrichtung kann Teil einer technische Anlage sein, die zudem ein erstes Funktionselement zum Anschluss an eine Leitung einer Hydraulik, und ein zweites Funktionselement zum Anschluss an eine Leitung einer Hydraulik aufweist, wobei die mindestens eine Hydraulikverbindungsvorrichtung das erste und zweite Funktionselement verbindet.

Die Aufgabe wird zudem durch ein Verfahren zum Herstellen einer Hydraulikverbindungsvorrichtung nach Anspruch 9 gelöst. Das Verfahren hat die Schritte: Fertigen von mindestens zwei Kanälen als Durchgangsöffnungen des Körpers, Montieren mindestens eines ersten Dichtelements an dem Körper zum Abdichten des Körpers in einer Öffnung einer Trennvorrichtung, durch welche der Körper hindurchzuführen ist, und Montieren mindestens eines zweiten Dichtelements an dem Körper zum Abdichten der Verbindung zwischen dem Körper und dem jeweiligen Funktionselement, wie in Anspruch 9 beschrieben.

Das Verfahren erzielt die gleichen Vorteile, wie sie zuvor in Bezug auf die Hydraulikverbindungsvorrichtung genannt sind. Vorteilhafte weitere Ausgestaltungen des Verfahrens sind in den abhängigen Ansprüchen angegeben.

Der Schritt des Montierens von mindestens zwei Kanälen kann die Schritte umfassen Fertigen der mindestens zwei Kanäle mit mindestens einem der nachfolgend genannten Verfahren, nämlich Gießen, Bohren, Fräsen, additive Fertigung, und Vorsehen eines vorbestimmten Abstands zwischen den mindestens zwei Kanälen in dem Körper.

Das zuvor beschriebene Verfahren hat möglicherweise zudem den Schritt Fertigen mindestens einer Aussparung in einer Stirnfläche des Körpers zur Aufnahme des mindestens einen zweiten Dichtelements in dem Körper.

Das zuvor beschriebene Verfahren kann zudem den Schritt haben Bearbeiten des Außenumfangs des Körpers zur Aufnahme des ersten Dichtelements an dem Körper.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:
Fig. 1 ein sehr schematisches Blockschaltbild einer hydraulischen Anlage mit einer Hydraulikverbindungsvorrichtung gemäß einem ersten Ausführungsbeispiel;
Fig. 2 eine Seitenansicht der Hydraulikverbindungsvorrichtung von Fig. 1;
Fig. 3 eine Draufsicht auf ein Ende eines Körpers der Hydraulikverbindungsvorrichtung gemäß dem ersten Ausführungsbeispiel;
Fig. 4 eine Teilschnittansicht der Hydraulikverbindungsvorrichtung von Fig. 3; und
Fig. 5 eine Schnittansicht einer Hydraulikverbindungsvorrichtung gemäß einem zweiten Ausführungsbeispiel.

In den Figuren sind gleiche oder funktionsgleiche Elemente, sofern nichts anderes angegeben ist, mit denselben Bezugszeichen versehen.

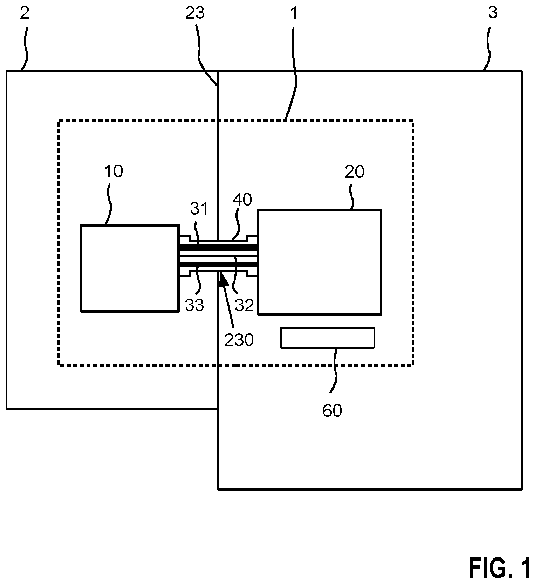

Fig. 1 zeigt sehr schematisch eine technische Anlage 1, die, insbesondere zumindest teilweise, eine hydraulische Anlage ist. Die Anlage 1 ist zum Teil in einer ersten Zone 2 und zum Teil in einer zweiten Zone 3 montiert. Die Zonen 2, 3 sind voneinander durch eine Trennvorrichtung 23 getrennt, die insbesondere als Wand oder Raumdecke oder Tür oder Schachtabdeckung, oder dergleichen, ausgeführt ist. In der Trennvorrichtung 23 ist eine Öffnung 230 vorgesehen. Die Zonen 2, 3 können insbesondere mindestens einen Raum eines Gebäudes umfassen, in oder bei dem die technische Anlage 1 angeordnet ist.

Die Anlage 1 kann beispielsweise eine Anlage zum Antrieb mindestens eines Elements in eine Bewegung sein. Insbesondere ist die Anlage 1 eine Fertigungsanlage für Gegenstände 60, die Fahrzeuge, Möbel, Heizkörper, usw. sind. Alternativ oder zusätzlich ist die Anlage 1 insbesondere eine Anlage zum Heizen und/oder zum Speichern von Wärme. Jedoch ist die Anlage 1 alternativ oder zusätzlich für beliebige andere Anwendungsfälle einsetzbar, bei denen Hydraulik verwendet wird.

Die Anlage 1 hat mindestens ein erstes Funktionselement 10 und ein zweites Funktionselement 20, Leitungen 31, 32, 33 und mindestens eine Hydraulikverbindungsvorrichtung 40. Die Vorrichtung 40 ist in der Öffnung 230 der Trennvorrichtung 23 angeordnet.

Optional ist das zweite Funktionselement 10 beispielsweise eine Hydraulikzentrale, die mit dem ersten Funktionselement 10 verbunden ist.

Die Funktionselemente 10, 20 sind über mindestens eine der Leitungen 31, 32, 33 miteinander verbunden. Die Leitungen 31, 32, 33 umfassen beispielsweise eine Leitung 31 für eine Flüssigkeit, eine Leitung 32 für mindestens ein Gas oder Gasgemisch, und mindestens eine Stromleitung 33. Die Flüssigkeit ist insbesondere eine Hydraulikflüssigkeit. Gemäß einem speziellen Beispiel umfassen die Leitungen 31, 32, 33 eine Leckageleitung als Leitung 31 und/oder als Leitung 33 mindestens eine Stromleitung oder ein Stromkabel, insbesondere für eine Stromversorgung oder mindestens eine Steuerleitung oder Busleitung.

Die Leitungen 31, 32, 33 sind bei dem Beispiel von Fig. 1 unter Verwendung nur einer Hydraulikverbindungsvorrichtung 40 zwischen den Zonen 2, 3 verlegt. In den Zonen 2, 3 herrschen unterschiedliche Umgebungsbedingungen. Die Umgebungsbedingungen der Zonen 2, 3 können beispielsweise in Bezug auf mindestens eine der Bedingungen Explosionsschutz, Nässe, Feuchte, Temperatur, Druck unterschiedlich sein.

Daher ist die Hydraulikverbindungsvorrichtung 40 derart ausgestaltet, dass in den Zonen 2, 3 die unterschiedlichen Umgebungsbedingungen vorhanden sind. Die Trennvorrichtung 23, insbesondere auch deren Öffnung 230, und die Hydraulikverbindungsvorrichtung 40 wirken zusammen, um die Zonen 2, 3 voneinander zu trennen. Diese Trennung ist somit nicht nur eine räumliche Trennung, sondern auch eine Trennung in Bezug auf die Umgebungsbedingungen in den beiden unterschiedlichen Zonen 2, 3.

Sind die Umgebungsbedingungen der Zonen 2, 3 unterschiedlich, so dichtet die Hydraulikverbindungsvorrichtung 40 die Zonen 2, 3 gegeneinander ab. Hierbei werden die Zonen 2, 3 derart sicher gegeneinander abgedichtet, dass die Anforderungen an den Betrieb der Anlage 1 eingehalten werden können.

Beispielsweise sind in der Zone 2 brennbare Gase zu verwenden, so dass in der Zone 2, und damit durch das erste Funktionselement 10, Explosionsschutzanforderungen zu erfüllen sind. Im Unterschied dazu ist es möglich, dass in der Zone 3 kein Explosionsschutz erforderlich ist. In diesem Fall sind von dem zweiten Funktionselement 20 keine Maßnahmen gegen Explosionsschutz zu erfüllen. Zudem gilt in diesem Fall, dass die Hydraulikverbindungsvorrichtung 40 die Zonen 2, 3 gegeneinander abdichten muss, so dass die Zone 2 sicher gegen die Zone 3 abgedichtet ist. Auf diese Weise können die Anforderungen an den Betrieb der Anlage 1 eingehalten werden, nämlich bei dem zuvor genannten Beispiel mindestens der Explosionsschutz in der Zone 2. Das für den Explosionsschutz beschriebene Prinzip gilt in derselben Weise auch für die anderen zuvor genannten unterschiedlichen Umgebungsbedingungen in den Zonen 2, 3.

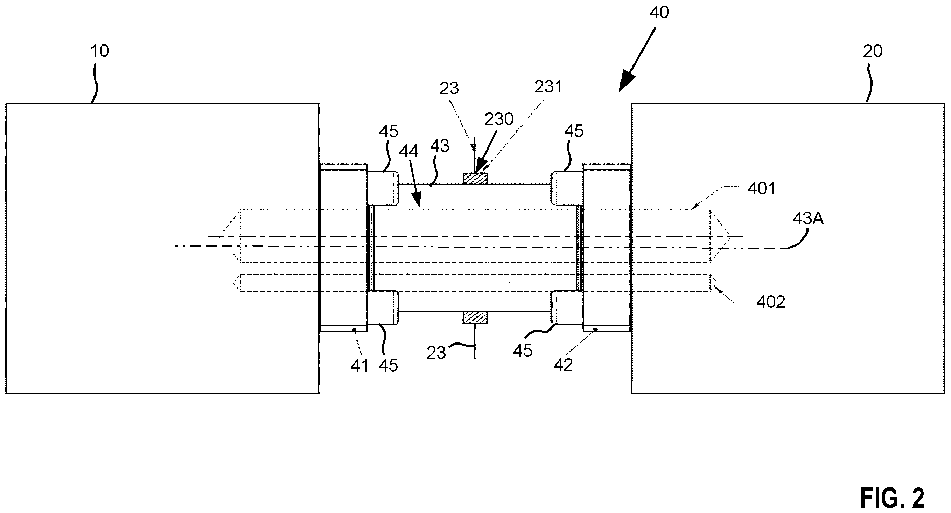

Fig. 2 zeigt eine Teilansicht der Verbindung zwischen dem Funktionselement 10 und der Hydraulikverbindungsvorrichtung 40.

Wie in Fig. 2 gezeigt, hat die Hydraulikverbindungsvorrichtung 40 einen ersten Flansch 41 zur Verbindung der Vorrichtung 40 mit dem ersten Funktionselement 10. Die Hydraulikverbindungsvorrichtung 40 von Fig. 2 ist an ihren Enden im Wesentlichen symmetrisch aufgebaut. Somit hat die Hydraulikverbindungsvorrichtung 40 einen zweiten Flansch 42 zur Verbindung der Vorrichtung 40 mit dem zweiten Funktionselement 20 von Fig. 1. Zudem hat die Hydraulikverbindungsvorrichtung 40 einen Körper 43, in dem optional eine Öffnung 44 vorgesehen sein kann. Die Öffnung 44 ist bei der Hydraulikverbindungsvorrichtung 40 als Durchgangsöffnung ausgestaltet. Die Hydraulikverbindungsvorrichtung 40 ist mit Befestigungselementen 45 an ihren Flanschen 41, 42 an dem jeweiligen Funktionselement 10, 20 befestigbar, wie in Fig. 2gezeigt. Bei dem Beispiel von Fig. 2 und sind die Befestigungselemente 45 als Schrauben ausgestaltet. Zudem ist der erste Flansch 41 mit einer Gewindeverbindung mit dem Körper 43 verbunden. Mit anderen Worten, der erste Flansch 41 ist auf den Körper 43 aufgeschraubt. Außerdem ist der zweite Flansch 42 mit einer Gewindeverbindung mit dem Körper 43 verbunden. Mit anderen Worten, der zweite Flansch 42 ist auf den Körper 43 aufgeschraubt.

Gemäß dem Beispiel von Fig. 2 ist die Hydraulikverbindungsvorrichtung 40 in der Trennvorrichtung 23 im Wesentlichen senkrecht zu der Trennvorrichtung 23 angeordnet. An dem Körper 43 ist ein erstes Dichtelement 231 vorgesehen. Das erste Dichtelement 231 ist in der Öffnung 230 der Trennvorrichtung 23 zwischen der Trennvorrichtung 23 und dem Körper 43 angeordnet. Das erste Dichtelement 231 liegt an dem Außenumfang des Körpers 43 an. Vorzugsweise ist hierfür der Außenumfang des Körpers 43 für einen Kontaktschluss mit dem ersten Dichtelement 231 entsprechend bearbeitet, um die erforderliche Abdichtung zwischen Trennvorrichtung 23 und dem Körper 43 herzustellen. Bei dem Beispiel von Fig. 2 hat der Körper 43 außen eine kreisförmige bzw. zylindrische, glatte Außengeometrie. Das Dichtelement 231 ist beispielsweise als ringförmiges Dichtband oder ringförmige Dichtscheibe oder Ring, insbesondere als O-Ring, ausgestaltet.

Der Körper 43 ist bei dem Beispiel von Fig. 2 als zylindrische Stange ausgestaltet, die innen hohl ist. Ist die optionale Öffnung 44 ausgebildet, ist der Körper 43 beispielsweise ein Hohlzylinder. Bei dem Beispiel von Fig. 2 sind in dem Körper 43, insbesondere in seiner optional vorhandenen Öffnung 44, Kanäle 401, 402 für die Leitungen 31 bis 33 vorgesehen. Alternativ ist es möglich, dass die Kanäle 401, 402 eine Flüssigkeit oder ein Gas direkt aufnehmen, so dass keine zusätzliche Leitung 31, 32 in den jeweiligen Kanal 401, 402 verlegt werden muss. In diesem Fall sind die einzelnen Leitungen 31, 32 mit dem entsprechenden Kanal 401, 402 derart zu verbinden, insbesondere abzudichten, dass eine Leckage der Flüssigkeit oder des Gases an der Verbindung verhindert wird.

Die Kanäle 401, 402 sind im Wesentlichen parallel zu der Achse 43A des Körpers 43 angeordnet. Mindestens einer der Kanäle 401, 402 kann insbesondere mit mindestens einem nicht dargestellten Kanal des Funktionselements 10 und einem nicht dargestellten Kanal des Funktionselements 20 verbunden sein. Die Kanäle 401, 402 sind beabstandet voneinander in dem Körper 43, insbesondere in der Öffnung 44, angeordnet.

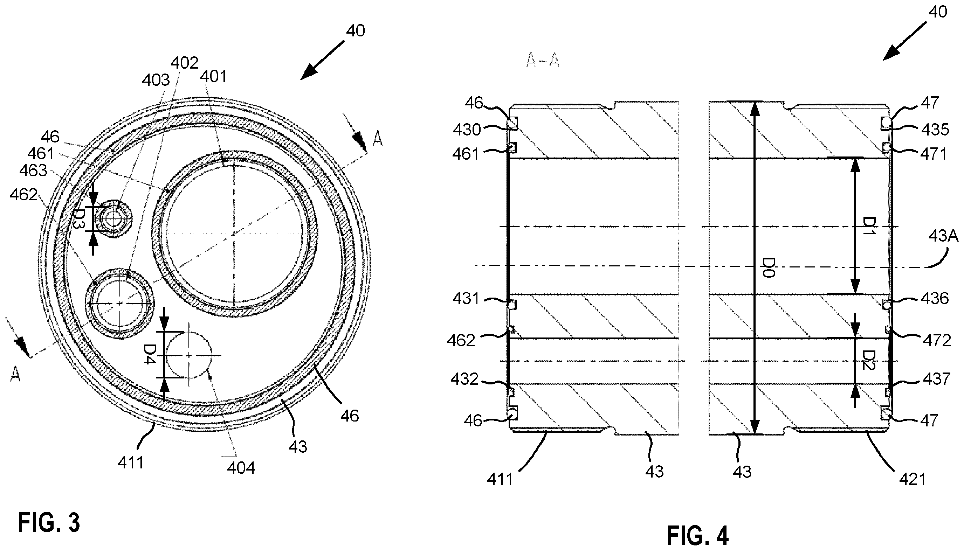

Ganz allgemein sind die Kanäle 401, 402 in einem bestimmten Querschnitt des Körpers 43 angeordnet. Ein spezielles Beispiel hierfür ist in Fig. 3 gezeigt. Zusätzlich ist noch eine ausreichende Wandstärke des Körpers 43 vorhanden, um die Stabilität oder Festigkeit des Körpers 43 zu gewährleisten. Damit wird auch die Stabilität oder Festigkeit der Vorrichtung 40 gewährleistet. Dazu sind die Kanäle 401 bis 404 durch geschickte Verbindungsführungen in den Funktionsbauteilen 10, 20 in einem definierten Durchmesser für die Öffnung 44 angeordnet.

Die Geometrie der Kanäle 401 bis 404 kann rund sein, wie in Fig. 2 und Fig. 3 gezeigt. Jedoch ist, je nach verwendetem Fertigungsverfahren, jede andere Form für mindestens einen der Kanäle 401, 402 möglich. Insbesondere haben die Kanäle 401, 402 zumindest teilweise einen ovalen Querschnitt. Insbesondere haben die Kanäle 401, 402 zumindest teilweise einen eckigen, insbesondere rechteckigen, Querschnitt.

Die Hydraulikverbindungsvorrichtung 40 ist für die Dicht- bzw. Durchgangsstelle bei der Zonentrennung der Zonen 2, 3 je nach den zu erwartenden Belastungen auslegbar. Der Abstand und/oder die Geometrie und/oder die Abmessungen, insbesondere der Durchmesser und/oder die Wandstärke, der mindestens zwei Kanäle 401 bis 404 werden abhängig von der Dichtungsaufgabe gewählt. Beispielsweise ist bei der Abdichtung mit der Vorrichtung 40 in Bezug auf eine Explosionsgefährdung besonderer Augenmerk zu richten auf insbesondere die Wandstärke zwischen den Kanälen 401, 402 und/oder auf den zu erwartenden Druck und/oder die Wahl des Dichtelements zum Abdichten der Kanäle 401, 402 Ist mit der Vorrichtung 40 eine Abdichtung gegen Nässe zu realisieren, gilt für den Abstand der Kanäle 401, 402, dass ausreichend Platz für das entsprechende Dichtelement vorzusehen ist. Bei einer Abdichtung mit der Vorrichtung 40 in Bezug auf Temperaturunterschiede gilt, dass die Vorrichtung 40 aus einem schlecht wärmeleitfähigen Material, wie beispielsweise Kunststoff gewählt wird. Sollen dagegen Temperaturunterschiede übertragen werden, so kann die Vorrichtung 40 aus einem gut wärmeleitfähigen Material, wie beispielsweise Metall, gewählt werden.

Fig. 3 und Fig. 4 zeigen den Aufbau der Enden der Hydraulikverbindungsvorrichtung 40 in der Draufsicht (Fig. 3) und in deren Schnittansicht (Fig. 4) noch genauer. Somit hat der Körper 43 der Hydraulikverbindungsvorrichtung 40 einen Außendurchmesser D0. Der erste Kanal 401 hat einen Durchmesser D1. Der zweite Kanal hat einen Durchmesser D2. Zudem sind gemäß Fig. 3 optional ein Kanal 403 und ein Kanal 404 vorhanden, die Durchmesser D3, D4 haben können Die optional vorhandene Öffnung 44 hat einen Innendurchmesser, der kleiner als der Durchmesser D0, jedoch größer als die Durchmesser D1, D2 ist.

Bei dem Beispiel von Fig. 3 und Fig. 4 ist die Achse der Kanäle 401 bis 404 im Wesentlichen parallel zu der Achse 43A des Körpers 43 angeordnet. Jedoch sind die Achse 43A des Körpers 43 und die Achsen der Kanäle 401 bis 404 beabstandet voneinander angeordnet. Dadurch ist der Körper 43 nicht achssymmetrisch. Bei dem Körper 43 von Fig. 4 ändert sich daher die Wandstärke W des Körpers 43, die zwischen seinem Außenumfang und den jeweiligen Kanälen 401 bis 404 vorhanden ist, entlang des Umfangs des Körpers 43.

In einer Aussparung 430 der ersten Stirnfläche des Körpers 43 ist ein Dichtelement 46 angeordnet, wie in Fig. 3 und auf der linken Seite in Fig. 4 gezeigt. Die Aussparung 430 ist um die Kanäle 401 bis 404 herum in der ersten Stirnfläche des Körpers 43 angeordnet. Das Dichtelement 46 ist beispielsweise als ringförmiges Dichtband oder ringförmige Dichtscheibe oder Ring, insbesondere als O-Ring, ausgestaltet. Zudem kann in der ersten Stirnfläche des Körpers 43 eine Aussparung 431 für ein Dichtelement 461 um den Kanal 401 herum angeordnet sein. Zudem kann in der ersten Stirnfläche des Körpers 43 eine Aussparung 432 für ein Dichtelement 462 um den Kanal 402 herum angeordnet sein. Zudem kann in der ersten Stirnfläche des Körpers 43 eine nicht dargestellte Aussparung für ein Dichtelement 463 um den Kanal 403 herum angeordnet sein, wie in Fig. 3 gezeigt. Gemäß dem Beispiel von Fig. 3 ist der Kanal 404 ein nicht abgedichteter Kanal.

Bei dem Beispiel von Fig. 4 hat der Körper 43 an einem Teil seines Außenumfangs ein Gewinde 411 für den ersten Flansch 41. Mit anderen Worten, der erste Flansch 41 ist auf den Körper 43 aufschraubbar. Je nach Anordnung des ersten Flanschs 41 mit der Gewindeverbindung relativ zu dem Körper 43 und der Anordnung und Anzahl der Befestigungselemente 45 in dem ersten Flansch 41 kann der Druck zwischen dem Funktionselement 10 und dem Körper 43 sowie zwischen dem Funktionselement 10 und dem im Körper 43 angeordneten Dichtelement 46 festgelegt werden. Die Verbindung zwischen dem Funktionselement 10 und der Vorrichtung 40 wird mit den Befestigungselementen 45 in der definierten Position gehalten.

Außerdem hat der Körper 43 bei dem Beispiel von Fig. 4 an einem Teil seines Außenumfangs ein Gewinde 421 für den zweiten Flansch 42. Mit anderen Worten, der zweite Flansch 42 ist auf den Körper 43 aufschraubbar.

In einer Aussparung 435 der zweiten Stirnfläche des Körpers 43 ist ein Dichtelement 47 angeordnet, wie auf der rechten Seite in Fig. 4 gezeigt.

Die Aussparung 435 ist um den ersten Kanal 401 herum in der zweiten Stirnfläche des Körpers 43 angeordnet. Das Dichtelement 47 ist beispielsweise als ringförmiges Dichtband oder ringförmige Dichtscheibe oder Ring, insbesondere als O-Ring, ausgestaltet. Zudem kann in der zweiten Stirnfläche des Körpers 43 eine Aussparung 436 für ein Dichtelement 471 um den Kanal 401 herum angeordnet sein. Zudem kann in der zweiten Stirnfläche des Körpers 43 eine Aussparung 437 für ein Dichtelement 472 um den Kanal 402 herum angeordnet sein. Zudem kann in der zweiten Stirnfläche des Körpers 43 eine nicht dargestellte Aussparung und ein Dichtelement um den Kanal 403 herum angeordnet sein, analog zu Fig. 3. Gemäß dem Beispiel von Fig. 3 kann der Kanal 404 auch auf der zweiten Stirnfläche des Körpers 43 ein nicht abgedichteter Kanal sein.

Je nach Anordnung des zweiten Flanschs 42 mit der Gewindeverbindung relativ zu dem Körper 43 und der Anordnung und Anzahl der Befestigungselemente 45 in dem zweiten Flansch 42 kann der Druck zwischen dem Funktionselement 20 und dem Körper 43 sowie zwischen dem Funktionselement 20 und dem im Körper 43 angeordneten Dichtelement 47 festgelegt werden. Die Verbindung zwischen dem Funktionselement 20 und der Vorrichtung 40 wird mit den Befestigungselementen 45 in der definierten Position gehalten.

Die zuvor beschriebene Hydraulikverbindungsvorrichtung 40 ist somit ein Bauelement, welches von einer Anzahl (>1) von mindestens zwei Kanälen 401 bis 404 für die jeweils benötigte Anzahl von Leitungen 31 bis 33 oder Medien für die Hydraulikverbindung durchdrungen wird. In diesen Kanälen 401 bis 404 können Medien für die Hydraulik der technischen Anlage 1 von einer Zone 2 zu einer anderen Zone 3 transportiert bzw. durchgeführt werden. Die Hydraulik der technischen Anlage 1 wird mit den Funktionselementen 10, 20 realisiert. Die Medien für die Hydraulik sind beispielsweise mindestens eine Flüssigkeit oder mindestens ein Gas oder mindestens eine Art von elektrischer Energie in einem Kabel.

Bei einem Verfahren zum Herstellen der Vorrichtung 40 kann die optionale Öffnung 44 in dem Körper 43 beispielsweise durch Bohren oder Fräsen oder durch Vorsehen einer Negativform bei Gießen oder additiver Fertigung des Körpers 43 gefertigt werden. Die Kanäle 401 bis 404 in dem Körper 43 können je nach gewünschter Geometrie durch mindestens eine der nachfolgenden Fertigungstechniken gefertigt werden, nämlich Bohren, Fräsen, Gießen, additive Fertigung.

Wie in Fig. 1 bis Fig. 4 gezeigt, hat die Hydraulikverbindungsvorrichtung 40 im Bereich der Durchdringung der Trennvorrichtung 23 eine möglichst unaufwändig ausgestaltete Geometrie. Dadurch ist die Hydraulikverbindungsvorrichtung 40 im Bereich der Durchdringung der Trennvorrichtung 23 sehr unaufwändig abdichtbar.

Insgesamt kann unabhängig vom Fertigungsverfahren der Vorrichtung 40 eine einfache und sichere Abdichtgeometrie im Bereich der Trennvorrichtung 23 sowie Festigkeit und gegebenenfalls ein Korrosionsschutz mit der Abdichtung erreicht werden. Dabei kann die Vorrichtung 40 mit niedrigen Kosten durch unaufwändige Herstellung und Montage realisiert werden, so dass mindestens zwei Kanäle 401 bis 404 in einem Bauteil mit einfach abzudichtender Außengeometrie realisierbar sind. Hierbei ist die Anzahl der mindestens zwei Kanäle 401 bis 404 je nach Bedarf frei wählbar.

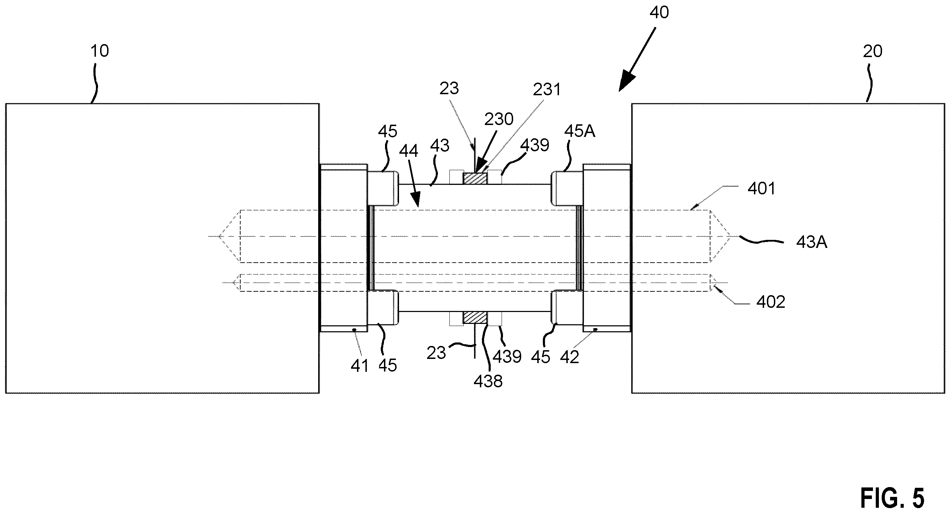

Fig. 5 zeigt eine Hydraulikverbindungsvorrichtung 40A gemäß einem zweiten Ausführungsbeispiel. Die Hydraulikverbindungsvorrichtung 40A gemäß dem vorliegenden Ausführungsbeispiel ist bis auf die nachfolgenden Unterschiede identisch zu der Hydraulikverbindungsvorrichtung 40 gemäß dem vorangehenden Ausführungsbeispiel aufgebaut.

Bei der Hydraulikverbindungsvorrichtung 40A hat der Körper 43 außen eine um den Körperumfang herum angeordnete Nut 438, welche das mindestens eine erste Dichtelement 231 an dem Körper 43 axial fixieren kann. Bei dem Beispiel von Fig. 5 hat der Körper 43 einen um den Körperumfang herum angeordneten Absatz oder Vorsprung 439, in welchem die Nut 438 angeordnet ist.

Auf diese Weise kann die Hydraulikverbindungsvorrichtung 40A in einer definierten Position in der Trennvorrichtung 23 angeordnet werden.

Optional ist bei dem Beispiel von Fig. 5 eines der Befestigungselemente 45A als Schweißverbindung ausgeführt. Im Gegensatz zu den Schrauben als Befestigungselement 45, die/das als lösbare Befestigung ausgestaltet sind/ist, ist das Befestigungselement 45A als Schweißverbindung eine unlösbare Befestigung.

Gemäß einer Modifikation des zweiten Ausführungsbeispiels ist die Nut 438 in der Außenfläche des Körpers 43 vorgesehen. Bei einem zylindrischen Körper 43 kann eine solche Nut 438 nach Fertigung des Körpers 43 beispielsweise durch Drehen außen in den Körper 43 eingebracht werden.

Gemäß einem dritten Ausführungsbeispiel ist mindestens einer der Kanäle 401 bis 404 durch einen der Flansche 41, 42 geführt. In diesem Fall hat der entsprechende Flansch 41, 42 mindestens eine Öffnung, durch welchen mindestens einer der Kanäle 401 bis 404 geführt ist.

Gemäß einem vierten Ausführungsbeispiel ist die Geometrie mindestens eines der Dichtelemente 46, 47 oval. In diesem Fall kann auch der zugehörige Kanal 401 bis 404 oder die optionale Öffnung 44 einen ovalen Querschnitt haben. Eine derartige Ausgestaltung ist vorteilhaft, um beispielsweise den verfügbaren Platz für die Anordnung der inneren Kanäle 401 bis 404 bei der Vorrichtung 40 zu optimieren.

Gemäß einem fünften Ausführungsbeispiel ist einer der beiden Flansche 41, 42 und der Körper 43 als ein Bauteil gefertigt. Dies ist beispielsweise durch Gießen bei Verwendung eines Kernes möglich. Alternativ oder zusätzlich ist dies durch additive Fertigung dieses einen Bauteils möglich, insbesondere dreidimensionalen Druck (3D-Druck). In diesen Fällen eröffnen sich besonders viele Freiheiten bezüglich der geometrischen Gestaltung des Körpers 43, der Öffnung 44, der mindestens zwei Kanäle 401 bis 404 und des mindestens einen Flansches 41, 42.

Alle zuvor beschriebenen Ausgestaltungen der Anlage 1, der Hydraulikverbindungsvorrichtung 40 und des Verfahrens zur Herstellung der Vorrichtung 40 können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Anlage 1 kann mindestens eine Hydraulikverbindungsvorrichtung 40 aufweisen.

Der Querschnitt des Körpers 43 kann eine beliebige Kombination der Formen eckig rund, gebogen, oval haben. Der Querschnitt der Öffnung 44 kann eine beliebige Kombination der Formen eckig, rund, gebogen, oval haben.

Möglicherweise ist einer der Flansche 41, 42 fest mit dem Körper 43 verbunden. Somit ist in diesem Fall nur einer der Flansche 41, 42 fest mit der Hydraulikverbindungsvorrichtung 40 verbunden. In diesem Fall kann nur einer der Flansche 41, 42 mit dem Gewinde 411, 421 für die Gewindeverbindung an der Hydraulikverbindungsvorrichtung 40 befestigt werden. Mit anderen Worten, in diesem Fall ist nur der erste oder der zweite Flansch 41, 42 lösbar an dem Körper 43 befestigbar.

Der Körper 43 und/oder die Flansche 41, 42 sind beispielsweise aus Metall, insbesondere Edelstahl, und/oder Kunststoff gefertigt. Mindestens eines der Dichtelemente 46, 47, 231, 461, 462, 471, 472 ist aus einem üblichen Dichtungswerkstoff, meist einem Elastomer oder Gummi oder Kunststoff gefertigt.

Mindestens eines der Dichtelemente 46, 47, 231, 461, 462, 471, 472 ist als Flachdichtung ausgeführt. Die Flachdichtung liegt an der entsprechenden Stirnfläche des Körpers 43 an. Die Flachdichtung kann an dem Körper 43 axial verspannt sein. Dadurch kann die zugehörige Aussparung 430 bis 432, 435 bis 437 entfallen.

Optional ist mehr als ein Dichtelement 46 um die Kanäle 401 bis 404 herum vorgesehen. Hierfür kann um die Aussparung 430 herum, insbesondere konzentrisch um die Achse 43A des Körpers 43, mindestens eine zweite Aussparung vorgesehen sein. Ähnliches gilt für jedes der Dichtelemente 461, 462, 471, 472 der Kanäle 401, 402 oder für den Kanal 403.

Optional ist mehr als ein Dichtelement 47 um die Kanäle 401 bis 404 herum vorgesehen. Hierfür kann um die Aussparung 435 herum, insbesondere konzentrisch um die Achse 43A des Körpers 43, mindestens eine zweite Aussparung vorgesehen sein.

Optional ist mehr als ein Dichtelement 231 um den Körper 43 herum vorgesehen.

## Patentansprüche

1. Hydraulikverbindungsvorrichtung (40) zur Verbindung eines ersten und eines zweiten hydraulischen Funktionselements (10, 20), mit
einem Körper (43), in dem mindestens zwei Kanäle (401 bis 404) angeordnet sind, die Durchgangsöffnungen durch den Körper (43) bilden,
mindestens einem ersten Dichtelement (231) zum Abdichten des Körpers (43) in einer Öffnung (230) einer Trennvorrichtung (23), durch welche der Körper (43) hindurchzuführen ist, und
mindestens einem zweiten Dichtelement (46; 47; 461; 462; 463; 471; 472) zum Abdichten der Verbindung zwischen dem Körper (43) und dem jeweiligen Funktionselement (10, 20),
einem ersten Flansch (41) zur Befestigung der Hydraulikverbindungsvorrichtung (40) an dem ersten hydraulischen Funktionselement (10), und
einem zweiten Flansch (42) zur Befestigung der Hydraulikverbindungsvorrichtung (40) an dem zweiten hydraulischen Funktionselement (10),
wobei der erste und/oder zweite Flansch (41, 42) lösbar an dem Körper (43) befestigt sind, und
wobei der erste und/oder zweite Flansch (41, 42) und der Körper (43) ausgestaltet sind, um mit einer Gewindeverbindung (411, 421) lösbar aneinander befestigt zu werden.

2. Hydraulikverbindungsvorrichtung (40) nach Anspruch 1, wobei der Körper (43) an seinem Außenumfang zur Aufnahme des mindestens einen ersten Dichtelements (231) ausgestaltet ist.

3. Hydraulikverbindungsvorrichtung (40) nach Anspruch 1 oder 2,
wobei der Körper (43) mindestens eine Aussparung (430 bis 432; 435 bis 437) aufweist, die zur Aufnahme des mindestens einen zweiten Dichtelements (46; 47; 461; 462; 463; 471; 472) ausgestaltet ist, und
wobei die mindestens eine Aussparung (431; 432) um mindestens einen der mindestens zwei Kanäle (401 bis 404) des Körpers (43) herum angeordnet ist.

4. Hydraulikverbindungsvorrichtung (40) nach einem der vorangehenden Ansprüche, wobei die mindestens zwei Kanäle (401 bis 404) in dem Körper (43) beabstandet voneinander angeordnet sind.

5. Hydraulikverbindungsvorrichtung (40) nach einem der vorangehenden Ansprüche, wobei mindestens ein Kanal (401 bis 404) der mindestens zwei Kanäle (401 bis 404) zur Aufnahme eines flüssigen oder gasförmigen Mediums ausgestaltet ist.

6. Hydraulikverbindungsvorrichtung (40) nach einem der vorangehenden Ansprüche, wobei mindestens ein Kanal der mindestens zwei Kanäle (401 bis 404) zur Aufnahme eines Stromkabels oder zur Aufnahme einer Rohrleitung für ein flüssiges oder gasförmiges Medium ausgestaltet ist.

7. Hydraulikverbindungsvorrichtung (40) nach einem der vorangehenden Ansprüche,
wobei der Körper (43) ein Hohlzylinder ist, oder
wobei der Körper (43) einen zumindest teilweise eckigen Querschnitt hat, oder
wobei der Körper (43) einen zumindest teilweise ovalen Querschnitt hat.

8. Technische Anlage (1), mit
einem ersten Funktionselement (10) zum Anschluss an eine Leitung (31, 32, 33) einer Hydraulik,
einem zweiten Funktionselement (20) zum Anschluss an eine Leitung (31 bis 34) einer Hydraulik, und
mindestens einer Hydraulikverbindungsvorrichtung (40) nach einem der vorangehenden Ansprüche, welche das erste und zweite Funktionselement (10, 20) verbindet.

9. Verfahren zum Herstellen einer Hydraulikverbindungsvorrichtung (40), die zur Verbindung eines ersten und eines zweiten hydraulischen Funktionselements (10, 20) vorgesehen ist und die einen Körper (43), einen ersten Flansch (41) zur Befestigung der Hydraulikverbindungsvorrichtung (40) an dem ersten hydraulischen Funktionselement (10), und einen zweiten Flansch (42) zur Befestigung der Hydraulikverbindungsvorrichtung (40) an dem zweiten hydraulischen Funktionselement (10) aufweist, und wobei das Verfahren die Schritte aufweist
Fertigen von mindestens zwei Kanälen (401 bis 404) als Durchgangsöffnungen des Körpers (43),
Montieren mindestens eines ersten Dichtelements (231) an dem Körper (43) zum Abdichten des Körpers (43) in einer Öffnung (230) einer Trennvorrichtung (23), durch welche der Körper (43) hindurchzuführen ist,
Montieren mindestens eines zweiten Dichtelements (46; 47) an dem Körper (43) zum Abdichten der Verbindung zwischen dem Körper (43) und dem jeweiligen Funktionselement (10, 20), und
lösbar Befestigen des ersten und/oder zweiten Flanschs (41, 42) an dem Körper (43),
wobei der erste und/oder zweite Flansch (41, 42) und der Körper (43) ausgestaltet werden, um mit einer Gewindeverbindung (411, 421) lösbar aneinander befestigt zu werden.

10. Verfahren nach Anspruch 9, wobei der Schritt des Montierens von mindestens zwei Kanälen (401 bis 404) die Schritte umfasst
Fertigen der mindestens zwei Kanäle (401 bis 404) mit mindestens einem der nachfolgend genannten Verfahren, nämlich Gießen, Bohren, Fräsen, additive Fertigung, und
Vorsehen eines vorbestimmten Abstands zwischen den mindestens zwei Kanälen (401 bis 404) in dem Körper (43).

11. Verfahren nach Anspruch 9 oder 10, zudem mit dem Schritt Fertigen mindestens einer Aussparung (430 bis 432; 435 bis 437) in einer Stirnfläche des Körpers (43) zur Aufnahme des mindestens einen zweiten Dichtelements (46, 47; 461; 462; 463; 471; 472) in dem Körper (43).

12. Verfahren nach einem der Ansprüche 9 bis 11, zudem mit dem Schritt Bearbeiten des Außenumfangs des Körpers (43) zur Aufnahme des ersten Dichtelements (231) an dem Körper (43).

## Claims

1. Hydraulic connecting device (40) for connecting a first and a second hydraulic functional element (10, 20), having
a body (43), in which there are arranged at least two channels (401 to 404), which form passage openings through the body (43),
at least one first seal element (231) for sealing off the body (43) in an opening (230) of a separating device (23) through which the body (43) is to be led, and
at least a second seal element (46; 47; 461; 462; 463; 471; 472) for sealing off the connection between the body (43) and the respective functional element (10, 20),
a first flange (41) for fixing the hydraulic connecting device (40) to the first hydraulic functional element (10), and
a second flange (42) for fixing the hydraulic connecting device (40) to the second hydraulic functional element (10),
wherein the first and/or second flange (41, 42) are detachably fixed to the body (43), and
wherein the first and/or second flange (41, 42) and the body (43) are configured so as to be fixed detachably to each other by using a threaded connection (411, 421).

2. Hydraulic connecting device (40) according to Claim 1, wherein the body (43) is configured on its outer circumference to receive the at least one first seal element (231).

3. Hydraulic connecting device (40) according to Claim 1 or 2,
wherein the body (43) has at least one recess (430 to 432; 435 to 437), which is configured to receive the at least one second seal element (46; 47; 461; 462; 463; 471; 472), and
wherein the at least one recess (431; 432) is arranged around at least one of the at least two channels (401 to 404) in the body (43).

4. Hydraulic connecting device (40) according to one of the preceding claims, wherein the at least two channels (401 to 404) are arranged at a distance from each other in the body (43).

5. Hydraulic connecting device (40) according to one of the preceding claims, wherein at least one channel (401 to 404) of the at least two channels (401 to 404) is configured to receive a liquid or gaseous medium.

6. Hydraulic connecting device (40) according to one of the preceding claims, wherein at least one channel of the at least two channels (401 to 404) is configured to receive a power cable or to receive a pipeline for a liquid or gaseous medium.

7. Hydraulic connecting device (40) according to one of the preceding claims,
wherein the body (43) is a hollow cylinder, or
wherein the body (43) has an at least partly angular cross section, or
wherein the body (43) has an at least partly oval cross section.

8. Technical installation (1), comprising
a first functional element (10) for connection to a line (31, 32, 33) of a hydraulic system,
a second functional element (20) for connection to a line (31 to 34) of a hydraulic system, and
at least one hydraulic connecting device (40) according to one of the preceding claims, which connects the first and second functional element (10, 20).

9. Method for manufacturing a hydraulic connecting device (40) which is provided for connecting a first and a second hydraulic functional element (10, 20) and which has a body (43), a first flange (41) for fixing the hydraulic connecting device (40) to the first hydraulic functional element (10), and a second flange (42) for fixing the hydraulic connecting device (40) to the second hydraulic functional element (10), and wherein the method includes the steps of
making at least two channels (401 to 404) as passage openings in the body (43),
mounting at least one first seal element (231) on the body (43) to seal off the body (43) in an opening (230) in a separating device (23), through which the body (43) is to be led,
mounting at least one second seal element (46; 47) on the body (43) to seal off the connection between the body (43) and the respective functional element (10, 20), and
detachably fixing the first and/or second flange (41, 42) to the body (43),
wherein the first and/or second flange (41, 42) and the body (43) are configured so as to be fixed detachably to each other by using a threaded connection (411, 421).

10. Method according to Claim 9, wherein the step of mounting at least two channels (401 to 404) comprises the steps of
making the at least two channels (401 to 404) by using at least one of the methods mentioned below, specifically casting, drilling, milling, additive fabrication, and
providing a predetermined distance between the at least two channels (401 to 404) in the body (43).

11. Method according to Claim 9 or 10, additionally including the step of making at least one recess (430 to 432; 435 to 437) in a front face of the body (43) to receive the at least one second seal element (46, 47; 461; 462; 463; 471; 472) in the body (43).

12. Method according to one of Claims 9 to 11, additionally including the step of machining the outer circumference of the body (43) to receive the first seal element (231) on the body (43).

## Revendications

1. Dispositif de liaison hydraulique (40) pour relier un premier et un deuxième élément fonctionnel hydraulique (10, 20), avec
un corps (43), dans lequel sont agencés au moins deux canaux (401 à 404) qui forment des ouvertures de passage à travers le corps (43),
au moins un premier élément d'étanchéité (231) pour étanchéifier le corps (43) dans une ouverture (230) d'un dispositif de séparation (23) à travers lequel le corps (43) doit passer, et
au moins un deuxième élément d'étanchéité (46 ; 47 ; 461 ; 462 ; 463 ; 471 ; 462 ; 463 ; 471) pour étanchéifier la liaison entre le corps (43) et l'élément fonctionnel respectif (10, 20),
une première bride (41) pour fixer le dispositif de liaison hydraulique (40) sur le premier élément fonctionnel hydraulique (10), et
une deuxième bride (42) pour fixer le dispositif de liaison hydraulique (40) sur le deuxième élément fonctionnel hydraulique (10),
dans lequel la première et/ou la deuxième bride (41, 42) sont fixées de manière amovible au corps (43), et
dans lequel la première et/ou la deuxième bride (41, 42) et le corps (43) sont conçus pour être fixés de manière amovible l'un à l'autre par une liaison filetée (411, 421).

2. Dispositif de liaison hydraulique (40) selon la revendication 1, dans lequel le corps (43) est conçu sur sa périphérie extérieure pour recevoir l'au moins un premier élément d'étanchéité (231).

3. Dispositif de liaison hydraulique (40) selon la revendication 1 ou 2,
dans lequel le corps (43) présente au moins un évidement (430 à 432 ; 435 à 437), qui est conçu pour recevoir l'au moins un deuxième élément d'étanchéité (46 ; 47 ; 461 ; 462 ; 463 ; 471 ; 472), et
dans lequel l'au moins un évidement (431 ; 432) est agencé autour d'au moins l'un des au moins deux canaux (401 à 404) du corps (43).

4. Dispositif de liaison hydraulique (40) selon l'une quelconque des revendications précédentes, dans lequel les au moins deux canaux (401 à 404) sont agencés espacés l'un de l'autre dans le corps (43).

5. Dispositif de liaison hydraulique (40) selon l'une quelconque des revendications précédentes, dans lequel au moins un canal (401 à 404) parmi les au moins deux canaux (401 à 404) est conçu pour recevoir un milieu liquide ou gazeux.

6. Dispositif de liaison hydraulique (40) selon l'une quelconque des revendications précédentes, dans lequel au moins un canal parmi les au moins deux canaux (401 à 404) est conçu pour recevoir un câble électrique ou pour recevoir une conduite pour un milieu liquide ou gazeux.

7. Dispositif de liaison hydraulique (40) selon l'une quelconque des revendications précédentes,
dans lequel le corps (43) est un cylindre creux, ou
dans lequel le corps (43) a une section transversale au moins partiellement angulaire, ou
dans lequel le corps (43) a une section transversale au moins partiellement ovale.

8. Installation technique (1), avec
un premier élément fonctionnel (10) destiné à être raccordé à une conduite (31, 32, 33) d'un système hydraulique,
un deuxième élément fonctionnel (20) destiné à être raccordé à une conduite (31 à 34) d'un système hydraulique, et
au moins un dispositif de liaison hydraulique (40) selon l'une quelconque des revendications précédentes, qui relie le premier et le deuxième élément fonctionnel (10, 20).

9. Procédé de fabrication d'un dispositif de liaison hydraulique (40) qui est prévu pour relier un premier et un deuxième élément fonctionnel hydraulique (10, 20) et qui présente un corps (43), une première bride (41) pour fixer le dispositif de liaison hydraulique (40) au premier élément fonctionnel hydraulique (10), et une deuxième bride (42) pour fixer le dispositif de liaison hydraulique (40) au deuxième élément fonctionnel hydraulique (10), et le procédé comprenant les étapes suivantes :
la fabrication d'au moins deux canaux (401 à 404) en tant qu'ouvertures de passage du corps (43),
le montage d'au moins un premier élément d'étanchéité (231) sur le corps (43) pour étanchéifier le corps (43) dans une ouverture (230) d'un dispositif de séparation (23) à travers lequel le corps (43) doit passer,
le montage d'au moins un deuxième élément d'étanchéité (46 ; 47) sur le corps (43) pour étanchéifier la liaison entre le corps (43) et l'élément fonctionnel respectif (10, 20), et
la fixation amovible de la première et/ou de la deuxième bride (41, 42) sur le corps (43),
dans lequel la première et/ou la deuxième bride (41, 42) et le corps (43) sont conçus pour être fixés de manière amovible l'un à l'autre par une liaison filetée (411, 421).

10. Procédé selon la revendication 9, dans lequel l'étape de montage d'au moins deux canaux (401 à 404) comprend les étapes suivantes :
la fabrication des au moins deux canaux (401 à 404) avec au moins l'un des procédés mentionnés ci-après, à savoir le moulage, le perçage, le fraisage, la fabrication additive, et
la prévision d'un espacement prédéterminé entre les au moins deux canaux (401 à 404) dans le corps (43).

11. Procédé selon la revendication 9 ou 10, en outre avec l'étape de fabrication d'au moins un évidement (430 à 432 ; 435 à 437) dans une surface frontale du corps (43) pour recevoir l'au moins un deuxième élément d'étanchéité (46, 47 ; 461 ; 462 ; 463 ; 471 ; 472) dans le corps (43).

12. Procédé selon l'une quelconque des revendications 9 à 11, en outre avec l'étape d'usinage de la périphérie extérieure du corps (43) pour recevoir le premier élément d'étanchéité (231) sur le corps (43).
